# FASCICULE DE BREVET EUROPEEN

(11) **EP 1 627 172 B1**
(45) Date de publication et mention de la délivrance du brevet: **16.01.2013**
(21) Numéro de dépôt: 04767181.3
(22) Date de dépôt: 26.05.2004
(51) Int. Cl.: F16L 37/14, F16L 37/088

(54) **EMBOUT DE CONNEXION RAPIDE**
SCHNELLVERBINDUNGSENDANSCHLUSS
QUICK-CONNECT END FITTING

(30) Priorité: 27.05.2003 FR 0306391
(43) Date de publication de la demande: 22.02.2006
(73) Titulaire: Etablissements Caillau, 92130 Issy-les-Moulineaux (FR)
(72) Inventeur: RIGOLLET, Nicolas, F-41200 Romorantin (FR); PREVOT, Fabrice, F-41130 Selles-sur-Cher (FR); ROINTRU, Tony, F-41210 Marcilly-en-Vault (FR)
(74) Mandataire: Intès, Didier Gérard André
(86) Numéro de dépôt international: PCT/FR2004/001303
(87) Numéro de publication internationale: WO 2004/106799

(56) Documents cités:
- DE-A- 19 742 041
- FR-A1- 2 820 489
- US-A- 3 695 646
- US-A1- 2002 171 241

## Description

La présente invention concerne un embout de connexion rapide susceptible d'être emmanché axialement sur un tube qui présente une surface d'accrochage sensiblement radiale distante de son extrémité libre, l'embout comprenant un corps apte à coopérer avec des moyens d'étanchéité pour établir une liaison étanche avec le tube et une agrafe de verrouillage, qui est retenue axialement par rapport au corps et qui présente au moins une zone de verrouillage, l'agrafe étant susceptible, à partir d'une configuration de verrouillage dans laquelle la zone de verrouillage fait saillie à l'intérieur du corps et est apte à coopérer avec la surface d'accrochage du tube pour retenir ce dernier, d'être déformée élastiquement pour adopter une configuration de déverrouillage.

Des embouts de connexion rapide de ce type sont connus, par exemple par EP 0 911 565 et WO 0/08656.

Dans ces embouts, l'agrafe de verrouillage, également dénommée anneau de verrouillage, a une forme oblongue et est disposée à l'intérieur du corps de l'embout, la paroi de ce dernier présentant une ouverture à travers laquelle un pontet de déverrouillage appartenant à l'agrafe de verrouillage fait saillie. Le passage de la configuration de verrouillage à la configuration de déverrouillage est obtenu par une pression sur ce pontet, qui écarte les deux zones de verrouillage diamétralement opposées que présente l'agrafe de verrouillage.

Ces embouts donnent toute satisfaction, mais le montage de l'agrafe à l'intérieur du corps présente parfois quelques difficultés. De plus, des dégagements doivent être ménagés à l'intérieur de ce corps pour loger les zones de verrouillage dans la configuration de déverrouillage de l'agrafe. Pour limiter les dimensions radiales du corps de l'embout, les zones de verrouillage doivent si possible présenter des épaisseurs radiales faibles afin de se loger aisément dans ces dégagements.

De plus, la déformation de l'agrafe lorsqu'elle passe de sa configuration de verrouillage à sa configuration de déverrouillage est entièrement dictée par les propriétés mécaniques de cette agrafe, sans être guidée par un quelconque élément appartenant au corps de l'embout.

Les embouts de connexion de EP 0 911 565 et WO 02/08656 présentent en revanche l'avantage de protéger les zones de verrouillage de l'agrafe de verrouillage, dans la mesure où celles-ci sont disposées à l'intérieur du corps de l'embout. Les risques de déverrouillage intempestif, et les risques de dégradation de certaines parties de l'agrafe, en particulier ses zones de verrouillage et les parties de l'agrafe adjacentes à ces zones, sont ainsi pratiquement éliminés.

FR 2820489 et DE 197 42 041 divulguent un embout de connexion rapide utilisant une agrafe ayant deux zones de verrouillage qui passent à travers des fentes transversales du corps et des extrémités repliées axialement formant des zones de déverrouillage qui coopèrent avec des renfoncements de déverrouillage situés près des fentes, selon le préambule de la revendication1.

La présente invention a pour but de proposer un embout de connexion rapide qui conserve les avantages précités en matière de protection de l'agrafe, tout en éliminant ou, au moins, en atténuant fortement les inconvénients mentionnés ci-dessus. En particulier, l'invention vise à favoriser le guidage de l'agrafe lors de ses déformations entre les configurations de verrouillage et de déverrouillage.

Ce but est atteint grâce au fait que l'agrafe est disposée sur la paroi du corps, cette dernière présentant au moins une fente transversale à travers laquelle la zone de verrouillage fait saillie à l'intérieur du corps dans la configuration de verrouillage de l'agrafe et au moins un renfoncement ménagé à une extrémité de la fente, ce renfoncement ayant une partie de fond formée sur le bord de la fente, au fait que l'agrafe présente au moins une zone de déverrouillage, qui est située à une extrémité de la zone de verrouillage et dont la largeur est supérieure à la largeur de ladite zone de verrouillage et à la largeur de la fente, mais inférieure ou égale à la largeur du renfoncement, lesdites largeurs étant mesurées axialement, au fait que ladite partie de fond du renfoncement forme une rampe de déverrouillage sur laquelle la zone de déverrouillage est apte à glisser pour faire passer l'agrafe de sa configuration de verrouillage à sa configuration de déverrouillage, et au fait que la partie de fond du renfoncement formant la rampe de déverrouillage est ménagée sur le bord de la fente, de part et d'autre de cette dernière, et la zone de déverrouillage s'étend axialement de part et d'autre de la zone de verrouillage.

Avec l'invention, la mise en place de l'agrafe sur la paroi du corps de l'embout peut être aisée et, en tout état de cause, la qualité de son positionnement par rapport à l'embout est détectable par l'utilisateur, puisque cette agrafe est disposée sur la paroi du corps. La zone de déverrouillage de l'agrafe est logée dans le renfoncement, de sorte que cette zone est protégée vis-à-vis d'éventuelles manipulations malencontreuses, ou de risques d'accrochage sur des éléments externes à la connexion. De plus, la déformation de l'agrafe lors de son passage de la configuration de verrouillage à la configuration de déverrouillage est parfaitement maîtrisée, puisqu'elle est conditionnée par le glissement de la zone de déverrouillage sur la rampe de déverrouillage.

De plus, les configurations de la partie de fond du renfoncement formant la rampe de déverrouillage et de la zone de déverrouillage favorisent le guidage de l'agrafe lors de ses déformations entre ses configurations de verrouillage et de déverrouillage, et limitent les risques de basculement de l'agrafe par rapport à un plan transversal à la direction axiale de la connexion.

Selon un mode de réalisation particulièrement avantageux, l'agrafe est formée à partir d'une bande de métal, la zone de verrouillage étant formée par une région de cette bande dans laquelle deux portions de bande situées de part et d'autre d'un pli orienté selon la longueur de la bande sont rabattues l'une contre l'autre.

L'agrafe est ainsi réalisée très simplement et à faible coût. Bien que la largeur de la zone de verrouillage soit faible, la quantité de métal présente dans cette zone est importante, puisqu'elle est constituée par les deux portions de bande situées de part et d'autre du pli précité. Ainsi, dans la zone de verrouillage, la résistance mécanique de l'agrafe est suffisante pour que l'agrafe oppose une résistance élevée aux efforts d'arrachement du tube par rapport à l'embout et que la zone de verrouillage soit relativement rigide et, notamment, ne se déforme pas ou quasiment pas lors des déformations de l'agrafe entre ses configurations de verrouillage et de déverrouillage. La surface de contact entre l'agrafe et la surface d'accrochage du tube est augmentée, ce qui a pour avantage de mieux répartir les contraintes entre ces deux éléments.

Avantageusement, le métal choisi pour réaliser la bande de métal précitée est de l'acier à ressort, l'agrafe pouvant être mise en forme, en particulier en ce qui concerne la conformation particulière de la zone de verrouillage avant la trempe de cet acier. Elle peut également être réalisée en inox.

Selon un autre mode de réalisation avantageux l'agrafe est formée à partir d'un fil de métal, dont au moins une portion est écrasée pour délimiter la zone de verrouillage.

Cette configuration est également intéressante, notamment en ce qui concerne la résistance mécanique de l'agrafe dans la zone de verrouillage.

Avantageusement, l'agrafe présente au moins une zone de déverrouillage supplémentaire située à l'autre extrémité de la zone de verrouillage, au moins une rampe de déverrouillage supplémentaire est ménagée à l'autre extrémité de la fente, et la zone de déverrouillage est apte à glisser sur la rampe de déverrouillage pour faire passer l'agrafe dans une première configuration de déverrouillage, tandis que la zone de déverrouillage supplémentaire est apte à glisser sur la rampe de déverrouillage supplémentaire pour faire passer l'agrafe dans une deuxième configuration de déverrouillage.

L'agrafe présente ainsi deux configurations distinctes de déverrouillage. Par exemple, l'une de ces configurations peut être obtenue par une action très simple, avec ou sans outil, sur l'agrafe lorsque cette dernière est dans sa configuration de verrouillage, de manière à obtenir un déverrouillage rapide et aisé de la connexion. L'autre configuration de déverrouillage peut être une configuration d'attente, dans laquelle l'agrafe peut être placée avant l'emmanchement de l'embout sur le tube pour réaliser la connexion. Une fois cette emmanchement réalisé, par une action très simple, l'agrafe peut passer de sa deuxième configuration de déverrouillage à sa configuration de verrouillage.

Avantageusement, le corps de l'embout présente deux fentes transversales situées en regard l'une de l'autre, au moins un renfoncement, dont une partie de fond forme une rampe de déverrouillage étant ménagé à une extrémité de chaque fente, tandis que l'agrafe présente deux zones de verrouillage engagées, chacune, dans l'une de ces fentes et au moins une zone de déverrouillage pour chaque zone de verrouillage.

Avantageusement, l'agrafe présente sensiblement une forme en U, ses deux branches étant terminées par des extrémités libres et étant reliées par un pontet opposé aux dites extrémités.

La géométrie de l'agrafe est simple et cette forme en U facilite sa mise en place sur la paroi du corps de l'embout. Les déformations élastiques de l'agrafe entre ses configurations de verrouillage et de déverrouillage peuvent également être facilitées par le fait que les extrémités des branches opposées au pontet sont des extrémités libres.

Avantageusement, l'agrafe est susceptible de présenter une configuration de déverrouillage par traction dans laquelle elle est amenée, à partir de sa configuration de verrouillage, par une traction opérée sensiblement dans un plan transversal, et l'embout comporte des moyens pour limiter le déplacement de l'agrafe par traction.

De préférence, ces moyens comprennent une surface de blocage, réalisée à une extrémité de la rampe de déverrouillage sur laquelle glisse une zone de déverrouillage lors de cette traction.

L'invention concerne également un embout de connexion rapide susceptible d'être emmanché axialement sur un tube qui présente une surface d'accrochage sensiblement radiale distante de son extrémité libre, l'embout comprenant un corps apte à coopérer avec des moyens d'étanchéité pour établir une liaison étanche avec le tube et une agrafe de verrouillage, qui est retenue axialement par rapport au corps et qui comporte deux branches, reliées par un pontet et pourvues, chacune, d'une zone de verrouillage, cette agrafe étant susceptible, à partir d'une configuration de verrouillage dans laquelle le pontet fait radialement saillie à l'extérieur du corps de l'embout et dans laquelle lesdites zones de verrouillage font saillie à l'intérieur du corps et sont aptes à coopérer avec la surface d'accrochage du tube pour retenir ce dernier, d'être déformée élastiquement par une pression sur le pontet pour adopter une configuration de déverrouillage par pression dans laquelle lesdites branches sont écartées.

Des embouts de connexion de ce type sont connus, par exemple par EP 0 911 565 et WO 02/08656. Comme indiqué précédemment, ces embouts connus donnent globalement satisfaction, mais ils présentent quelques inconvénients liés à la mise en place de l'agrafe à l'intérieur du corps de l'embout, à la nécessité de prévoir, dans ce dernier, un dégagement suffisant pour loger les zones de verrouillage en configuration de déverrouillage de l'agrafe, ou encore aux limitations dans les dimensions radiales des zones de verrouillage de l'agrafe qui en découlent.

De plus, dans ces embouts connus, la seule possibilité pour faire passer l'agrafe de sa configuration de verrouillage à sa configuration de déverrouillage est d'exercer une pression sur le pontet. Des connexions de ce type sont en général assemblées dans des environnements encombrés et dans lesquels l'accessibilité est réduite, tels que le compartiment moteur d'un véhicule. De plus, les environnements de ce type sont souvent encrassés, par exemple par de la graisse, de la poussière, du carburant ou autre, qui peuvent rendre glissant le pontet de l'agrafe ou se loger sous ce pontet.

Il en résulte qu'il est parfois difficile d'appliquer sur le pontet la pression voulue pour déverrouiller la connexion. Pour autant, la possibilité de déverrouiller l'agrafe par un simple appui sur le pontet reste souhaitable, car elle est très simple à mettre en oeuvre dans de nombreuses situations.

La présente invention a pour but de remédier à ces inconvénients, ou tout au moins de les atténuer.

Ce but est atteint grâce au fait que l'agrafe est disposée sur la paroi du corps, cette dernière présentant deux fentes transversales, à travers chacune desquelles l'une des zones de verrouillage fait saillie à l'intérieur du corps dans la configuration de verrouillage de l'agrafe, au fait que le corps présente, pour chaque fente, une rampe de déverrouillage par pression située à une extrémité de la fente et une rampe de déverrouillage par traction située à l'autre extrémité de la fente, au fait que l'agrafe présente, pour chaque zone de verrouillage, une zone de déverrouillage par pression située à une extrémité de la zone de verrouillage voisine du pontet et une zone de déverrouillage par traction située à l'autre extrémité de la zone de verrouillage, de telle sorte que, à partir de ladite configuration de verrouillage, l'agrafe est susceptible d'être déformée élastiquement par une pression sur le pontet pour adopter ladite configuration de déverrouillage par pression par glissement des zones de déverrouillage par pression sur les rampes de déverrouillage par pression et d'être déformée élastiquement par une traction sur le pontet pour adopter, en outre, une configuration de déverrouillage par traction par glissement des zones de déverrouillage par traction sur les rampes de déverrouillage par traction.

Ainsi, selon l'invention, il existe deux possibilités pour faire passer l'agrafe de sa configuration de verrouillage à sa configuration de déverrouillage : soit en appliquant une pression sur le pontet, soit en appliquant une traction sur ce dernier. Le déverrouillage peut être opéré manuellement dans les deux cas ou bien à l'aide d'un outil simple. Par exemple, l'effort de traction peut être appliqué en glissant le plat d'un tournevis sous le pontet et en utilisant ce tournevis comme un levier. Il est évidemment également envisageable d'utiliser une pince.

Avantageusement, au moins l'une desdites configurations de déverrouillage est stable, l'embout comportant des moyens pour maintenir l'agrafe dans cette configuration stable.

Cette configuration de déverrouillage stable peut être utilisée en situation d'attente, avant l'emmanchement de l'embout sur le tube. Cet emmanchement est alors rendu particulièrement aisé car les zones de verrouillage de l'agrafe ne font aucunement obstacle au passage de la surface d'accrochage du tube dans l'embout et, une fois l'emmanchement réalisé, il suffit de manipuler l'agrafe pour la faire sortir de cette configuration de déverrouillage stable et l'amener en configuration de verrouillage. Avantageusement, la configuration de déverrouillage stable est la configuration de déverrouillage par traction et, pour faire passer l'agrafe de cette configuration dans sa configuration de verrouillage, une simple pression sur le pontet, d'amplitude limitée est suffisante.

Avantageusement, l'agrafe présente sensiblement une forme en U, ses deux branches étant terminées par des extrémités libres et étant reliées par ledit pontet qui est opposé aux dites extrémités.

Cette forme géométrique simple favorise la mise en place de l'agrafe sur le corps de l'embout et lui confère l'élasticité souhaitée.

Avantageusement, les extrémités libres de l'agrafe sont repliées et la paroi du corps de l'embout présente des renfoncements de retenue dans lesquels lesdites extrémités libres repliées sont retenues dans la configuration de déverrouillage par traction.

Ces renfoncements de retenue et la configuration particulière des extrémités libres de l'agrafe permettent d'obtenir la configuration de déverrouillage stable par traction.

Avantageusement, les extrémités libres de l'agrafe sont repliées et forment les zones de déverrouillage par traction.

Avantageusement, le corps de l'embout présente des renfoncements de logement dans lesquels sont logées les extrémités libres de l'agrafe sur l'intégralité de leur course entre la configuration de verrouillage et la configuration de déverrouillage par pression.

Dans ce cas, avantageusement, le corps de l'embout présente un élément de paroi sous lequel sont disposées les extrémités libres de l'agrafe.

Les extrémités libres de l'agrafe sont ainsi protégées contre toute manipulation malencontreuse et tout risque d'accrochage avec un élément extérieur à la connexion.

L'invention sera bien comprise et ses avantages apparaîtront mieux à la lecture de la description détaillée qui suit, de modes de réalisation représentés à titre d'exemple non limitatif.

La description se réfère aux dessins annexés sur lesquels :
- la figure 1 est une vue en perspective d'une connexion comprenant un embout conforme à l'invention, selon un premier mode de réalisation, avant l'assemblage complet et la connexion de cet embout avec le tube ;
- la figure 2 est une vue en perspective de la connexion de la figure 1, assemblée ;
- la figure 3 est une vue en coupe axiale dans le plan III-III de la figure 2 ;
- la figure 4 est une vue en perspective montrant seulement la tranche axiale du corps de l'embout avec laquelle coopère l'agrafe de verrouillage et cette agrafe, lors de son montage sur ce corps ;
- la figure 5 est une coupe transversale dans le plan V-V de la figure 2, montrant l'agrafe dans sa configuration de verrouillage ;
- les figures 6 et 7 sont des coupes analogues à celles de la figure 5, montrant respectivement l'agrafe dans sa configuration de déverrouillage par pression et dans sa configuration de déverrouillage par traction ;
- les figures 8 à 10 sont des vues en perspective d'une agrafe selon des variantes de réalisation ;
- la figure 11 est une vue en perspective d'un embout selon un deuxième mode de réalisation ;
- la figure 12 est une vue de côté de l'embout de la figure 11 ;
- la figure 13 est une coupe axiale selon la ligne XIII-XIII de la figure 11 ;
- la figure 14 est une coupe transversale, selon la ligne XIV-XIV de la figure 13, montrant l'agrafe dans sa configuration de verrouillage ; et
- les figures 15 et 16 sont deux coupes analogues à celles de la figure 14, montrant respectivement l'agrafe dans sa configuration de déverrouillage par pression et dans sa configuration de déverrouillage par traction.

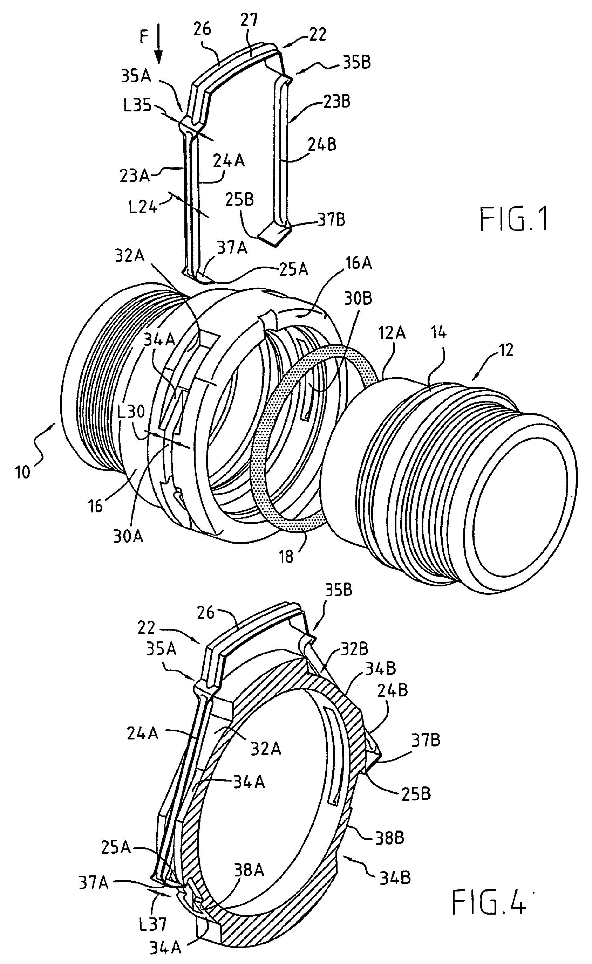

On décrit d'abord les figures 1 à 3, qui montrent l'embout de la connexion 10 et le tube 12 sur lequel il est emmanché. Ce tube présente une surface d'accrochage 14 sensiblement radiale, distante de son extrémité libre 12A.

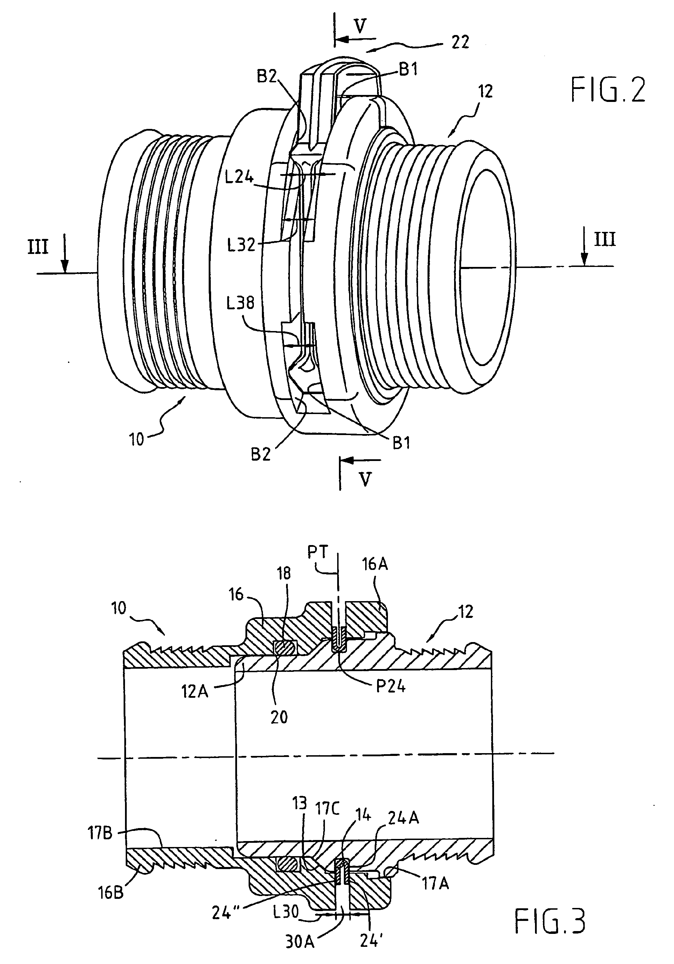

L'embout 10 comprend un corps 16 à l'intérieur duquel peut être emmanché le tube 12. Dans la position d'emmanchement représentée sur les figures 2 et 3, la liaison entre le tube et l'embout est étanche. A cet effet, un joint torique d'étanchéité 18 est disposé entre la paroi du corps de l'embout 16 et la paroi du tube 12. Par exemple, une gorge 20 est ménagée sur la paroi interne du corps de l'embout, pour loger ce joint 18, de telle sorte que ce dernier coopère avec une portion axiale de la paroi du tube 12 lorsque ce dernier est emmanché dans l'embout.

L'embout de connexion comporte également une agrafe de verrouillage 22 qui, comme on le voit mieux sur la figure 2, est disposée sur la paroi du corps 16 de l'embout en étant retenue axialement par rapport à ce corps. Cette agrafe présente deux zones de verrouillage, 24A et 24B. Si l'on considère la figure 1, on voit que l'agrafe présente sensiblement une forme en U avec deux branches 23A et 23B, sur lesquelles sont formées les zones de verrouillage précitées, ces deux branches se terminant par des extrémités libres, respectivement 25A et 25B, et étant reliées par un pontet 26 opposé à ces extrémités libres.

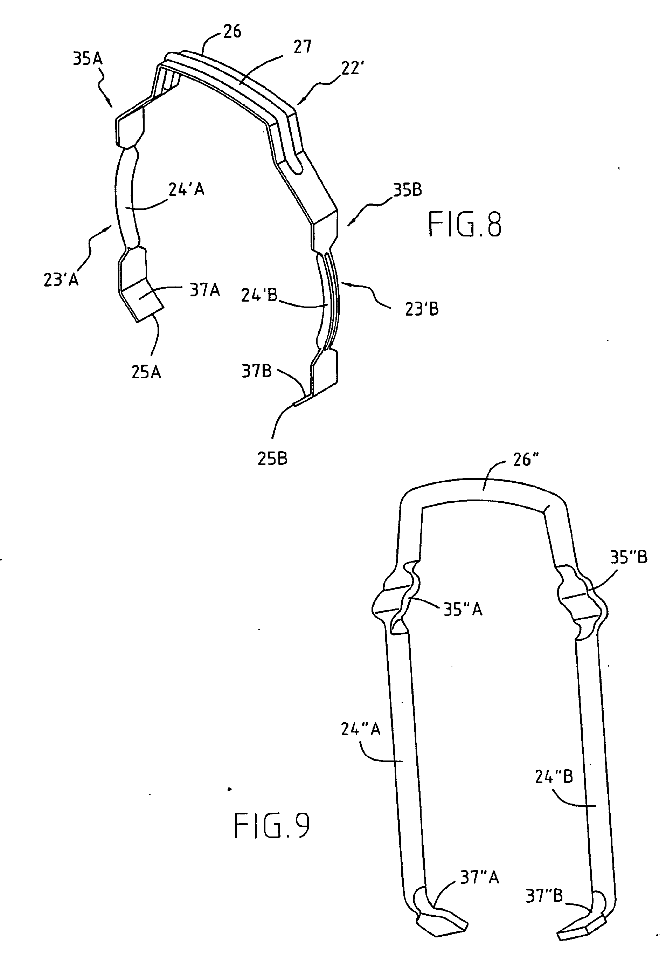

Dans l'exemple représenté sur les figures 1 à 3, les deux branches sont sensiblement rectilignes. Comme le montre la figure 8, on peut toutefois utiliser une agrafe 22' dont les branches 23'A et 23'B sont, au moins dans la région des zones de verrouillage 24'A et 24'B, légèrement arquées pour venir sensiblement épouser des portions du contour du tube 12 en configuration de verrouillage.

Le pontet 26 peut être renforcé par une nervure 27.

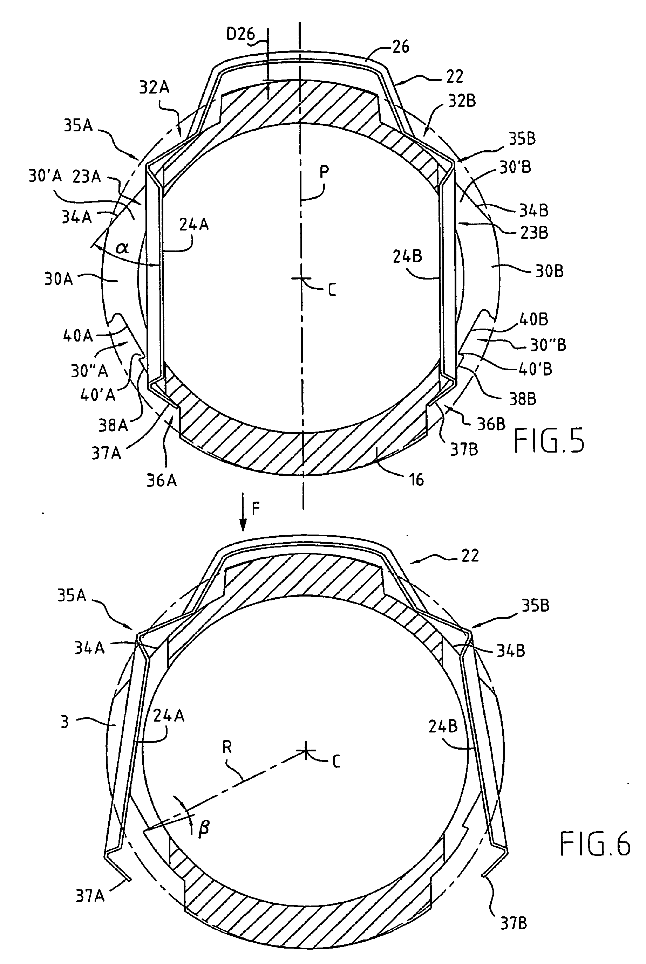

En configuration de repos de l'agrafe, les deux branches 23A et 23B peuvent être sensiblement parallèles entre elles ou aller en se rapprochant légèrement l'une de l'autre vers leurs extrémités libres 25A, 25B. Comme on le voit sur la figure 5, en configuration de verrouillage de l'agrafe 22, les zones de verrouillage 24A et 24B font saillie à l'intérieur du corps 16 de l'embout. Dans cette configuration, elles peuvent s'accrocher derrière l'épaulement 14 du tube 12 pour retenir ce dernier à l'intérieur de l'embout. Il convient de relever qu'entre son extrémité libre 12A et son épaulement 14, le tube présente une rampe 13 qui, lors de l'introduction du tube dans l'embout, tend à écarter les zones de verrouillage 24A et 24B de l'agrafe pour permettre l'emmanchement, même si cette agrafe est dans la configuration de verrouillage. La configuration de verrouillage de l'agrafe peut correspondre à sa position de repos. Toutefois, de préférence, dans sa configuration de verrouillage, ses branches sont en contrainte contre le tube, c'est-à-dire que le tube écarte légèrement les branches par rapport à la position de repos qu'elles auraient naturellement en l'absence du tube.

Pour l'emmanchement, le tube 12 est introduit dans le corps 16 par l'extrémité 16A de ce dernier. L'agrafe 22 est disposée sur le corps de telle sorte que ses zones de verrouillage font saillie dans une première partie 17A de la cavité qui est ménagée à l'intérieur du corps 16, cette première partie, de section circulaire, ayant des dimensions radiales aptes à recevoir le tube avec son épaulement 14. La gorge 20 dans laquelle est disposé le joint 18 est ménagée dans une deuxième partie 17B de la cavité du corps 16, de dimensions radiales plus réduites. La première partie 17A de cette cavité s'ouvre à l'extrémité 16A du corps de l'embout et est séparée de la deuxième partie par un épaulement ou une rampe 17C formant une butée pour la rampe 13 du tube précédemment évoqué.

La paroi du corps 16 présente deux fentes, respectivement 30A et 30B, à travers lesquelles les zones de verrouillage 24A et 24B de l'agrafe font respectivement saillie dans la partie 17A de la cavité, lorsque cette agrafe est dans sa configuration de verrouillage. Ces deux fentes 30A et 30B sont diamétralement opposées et sont orientées transversalement par rapport à la direction axiale de l'embout. La paroi extérieure du corps de l'embout, dans sa portion axiale d'extrémité correspondant à la première partie 17A de la cavité, présente une forme générale globalement cylindrique, à base circulaire ou, éventuellement, légèrement oblongue. Les deux fentes 30A et 30B s'ouvrent dans la première partie 17A de la cavité et sur cette paroi externe, dont le contour est indiqué en trait mixte interrompu sur les figures 5 à 7.

Pour simplifier la description qui va suivre, on considère que, en se rapportant à la figure 1, l'agrafe 22 est mise en place sur le corps de l'embout en étant déplacée verticalement vers le bas selon la flèche F. Avec cette convention, on désigne respectivement par les références 30'A et 30'B les extrémités supérieures des fentes 30A et 30B, et par les références 30"A et 30"B les extrémités inférieures de ces fentes.

La paroi extérieure du corps de l'embout présente des renfoncements 32A et 32B respectivement ménagés aux extrémités supérieures des fentes 30A et 30B. Les fonds de ces renfoncements sont formés en partie sur les bords des fentes aux extrémités desquelles ils sont respectivement ménagés. Ainsi, une partie du fond du renfoncement 32A est formée par une rampe de déverrouillage 34A disposée sur le bord supérieur de la fente 30, de part et d'autre de cette dernière. De même, une partie du fond du renfoncement 32B est formée par une rampe de déverrouillage 34B qui s'étend sur le bord supérieur de la fente 30B, de part et d'autre de cette dernière. Dans l'exemple représenté, les rampes 34A et 34B sont rectilignes et forment un angle a de l'ordre de 40° par rapport à la direction verticale parallèle à un plan de symétrie P de l'embout. De manière générale, cet angle a peut être compris entre 25° et 60°, l'inclinaison des rampes déterminant l'écartement des zones de verrouillage 24A et 24B de l'agrafe en fin de course de déverrouillage.

L'agrafe 22 présente quant à elle des zones de déverrouillage, respectivement 35A et 35B, la zone de verrouillage 35A étant située à l'extrémité supérieure de la zone de verrouillage 24A, entre cette dernière et le pontet 26, tandis que la zone de déverrouillage 35B est située à l'extrémité supérieure de la zone de verrouillage 24B, entre cette dernière et le pontet 26.

En considérant la figure 5, on voit que le pontet 26 fait radialement saillie par rapport au corps de l'embout 16 dont il est séparé par une distance D26 dans la configuration de verrouillage de l'agrafe. Lorsque l'on exerce une pression sur ce pontet comme indiqué par la flèche F, celui-ci peut se déplacer vers le bas en se rapprochant de la paroi extérieure du corps de l'embout et, lors de ce déplacement, les zones de déverrouillage 35A et 35B de l'agrafe glissent sur les rampes 34A et 34B du corps de l'embout, ce qui a pour effet d'écarter les branches 23A et 23B et, par conséquent, d'escamoter les zones de verrouillage 24A et 24B dans l'épaisseur de la paroi du corps de l'embout comme on le voit sur la figure 6. Dans la suite, cette configuration de déverrouillage sera dénommée configuration de déverrouillage par pression, les rampes 34A et 34B étant des rampes de déverrouillage par pression et les zones 35A et 35B de l'agrafe étant dénommées zones de déverrouillage par pression.

On voit que ces zones de déverrouillage par pression restent sensiblement logées dans les renfoncements 32A et 328 dans la configuration de verrouillage de l'agrafe, et également dans sa configuration de déverrouillage par pression.

Pour pouvoir glisser sur les rampes 34A et 34B sans pénétrer dans les fentes 30A et 30B, les zones de déverrouillage par pression 35A et 35B présentent une largeur L35 qui est supérieure à la largeur L24 des zones de verrouillage 24A et 24B et à la largeur L30 des fentes 30A et 30B, mais qui est inférieure ou égale à la largeur L32 des renfoncements 32A et 32B. Dans l'exemple représenté, l'embout est symétrique par rapport au plan P, de sorte que les largeurs des éléments de l'agrafe ou du corps de l'embout situés en correspondance de part et d'autre de ce plan sont égales.

La paroi externe du corps de l'embout présente également d'autres renfoncements, respectivement 36A et 36B, qui sont situés aux extrémités inférieures 30"A et 30"B des fentes 30A et 30B. Les fonds de ces renfoncements sont également formés, en partie, par les bords respectifs de ces fentes. Ainsi, une partie de fond du renfoncement 36A forme une rampe 38A ménagée sur le bord de la fente 30A, à l'extrémité inférieure 30"A de cette dernière, de part et d'autre de cette fente, et une partie du fond du renfoncement 36B est formée par une rampe 38B qui est formée de la même manière sur le bord de la fente 30B.

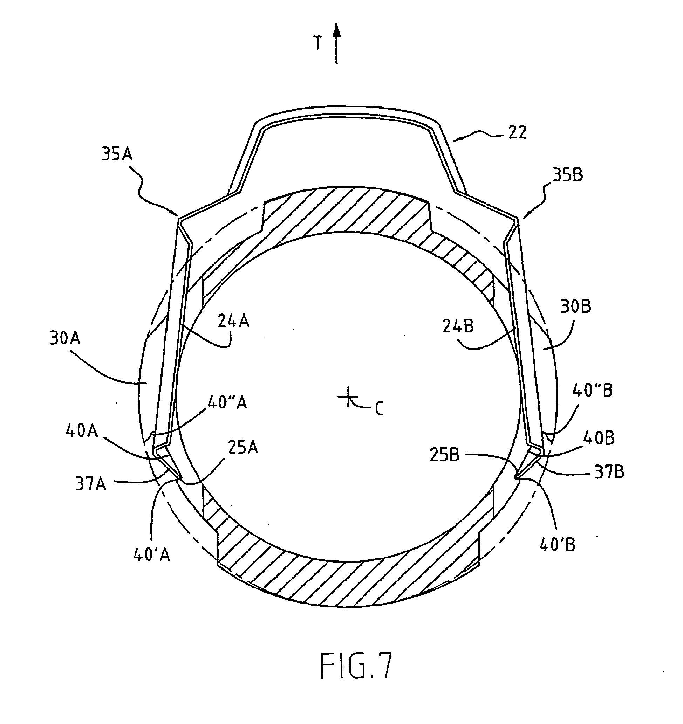

Pour coopérer avec ces rampes, l'agrafe présente des zones de déverrouillage, respectivement 37A et 37B, qui sont formées aux extrémités inférieures des zones de verrouillage 24A et 24B de l'agrafe, c'est-à-dire, en l'espèce, aux extrémités libres 25A et 25B de cette agrafe. En d'autres termes, ces zones de déverrouillage 37A et 37B sont situées de l'autre côté des zones de verrouillage 24A et 24B par rapport au pontet 26. On comprend que, à partir de la configuration de verrouillage représenté sur la figure 5, il est possible d'exercer une traction sur le pontet 26 dans le sens indiqué par la flèche T, pour faire glisser les zones de déverrouillage 37A et 37B sur les rampes de déverrouillage 38A et 38B de manière à amener l'agrafe dans sa configuration de déverrouillage par traction représenté sur la figure 7. Les rampes 38A et 38B sont donc dénommées rampes de déverrouillage par traction, et les zones de déverrouillage 37A et 37B sont dénommées zone de déverrouillage par traction.

Lors des déformations de l'agrafe entre sa configuration de verrouillage et sa configuration de déverrouillage par traction, les zones de déverrouillage par traction 37A et 37B glissent sur les rampes 38A et 38B, et la largeur L37 de ces zones de déverrouillage est supérieure à la largeur L24 des zones de verrouillage et à la largeur L30 des fentes. Elle est inférieure ou égale à la largeur L38 des renfoncements 38A et 38B. En l'espèce, les renfoncements 32A et 38A d'une part et les renfoncements 32B et 38B d'autre part sont situés dans la même tranche axiale du corps de l'embout et leurs largeurs L32 et L38 sont les mêmes. En effet, les bords transversaux avant B1 de ces renfoncements, voisins de l'extrémité libre 16A du corps de l'embout sont situés dans un même plan transversal à ce corps, de même que les bords transversaux arrière B2 de ces renfoncements sont situés dans un même plan transversal, ces deux plans transversaux délimitant entre eux la tranche axiale précédemment citée et représentée sur la figure 4. On voit que les zones de déverrouillage par traction 37A et 37B de l'agrafe sont logées dans les renfoncements 38A et 38B dans les configurations de verrouillage et de déverrouillage par traction.

Les bords B1 et B2 des renfoncements précédemment cités servent donc à retenir axialement l'agrafe par rapport au corps 16, c'est-à-dire à empêcher l'arrachement de cette agrafe dans la direction axiale A.

Si l'agrafe ne peut être déverrouillée que par traction, en utilisant seulement les zones de déverrouillage par traction 37A et 37B et les renfoncements 38A et 38B, alors la distance D26 entre le pontet 26 et le corps de l'embout peut être ramenée quasiment à zéro.

Avantageusement, la largeur de la ou des zones de verrouillage de l'agrafe est tout au plus sensiblement égale à la moitié de la largeur de la ou des zones de déverrouillage. Dans l'exemple représenté, la largeur L24 des zones de verrouillage est de l'ordre du tiers de la largeur L35 et L37 des zones de déverrouillage, ces largeurs L35 et L37 étant égales.

On a indiqué précédemment que l'embout est symétrique par rapport au plan P, qui contient la direction axiale A de cet embout et la direction verticale. L'agrafe est non seulement symétrique par rapport à ce plan, mais également par rapport à un plan transversal PT (voir figure 3). On voit en particulier que les zones de déverrouillage s'étendent, dans la direction axiale, des deux côtés de l'agrafe par rapport aux zones de verrouillage. Dans l'exemple représenté, l'agrafe 22 est formée à partir d'une bande de métal présentant initialement la largeur L35 ou L37 (ces deux largeurs étant égales). Les zones de verrouillage 24A et 24B sont formées par des régions de cette bande dans laquelle deux portions de bande, respectivement 24' et 24" situées de part et d'autre d'un pli P24 orienté selon la longueur de la bande, sont rabattues l'une contre l'autre. Ce pli P24 s'étend dans le plan transversal PT.

En variante, les zones de déverrouillage peuvent être formées par des emboutis, consistant à déformer localement chaque branche vers l'autre branche, comme dans l'exemple de la figure 8.

La figure 9 montre une variante pour une agrafe 22", réalisée à partir d'un fil de métal. Les zones de verrouillage 24"A, 24"B sont délimitées par des portions écrasées de ce fil. En l'espèce, les zones de verrouillage ont la section du fil, tandis que les portions écrasées forment les rampes de déverrouillage 35"A et 35"B (près du pontet 26") et 37"A et 37"B (près des extrémités libre de l'agrafe). Chaque zone de verrouillage est donc délimitée entre deux portions écrasées.

On pourrait concevoir que les zones de déverrouillage soient formées par les portions écrasées (auquel cas les écrasements seraient opérés parallèlement au plan de l'agrafe pour diminuer la largeur des zones de verrouillage tandis que, sur la figure 9, ils sont opérés perpendiculairement à ce plan), tandis que les zones de déverrouillage conserveraient la section du fil.

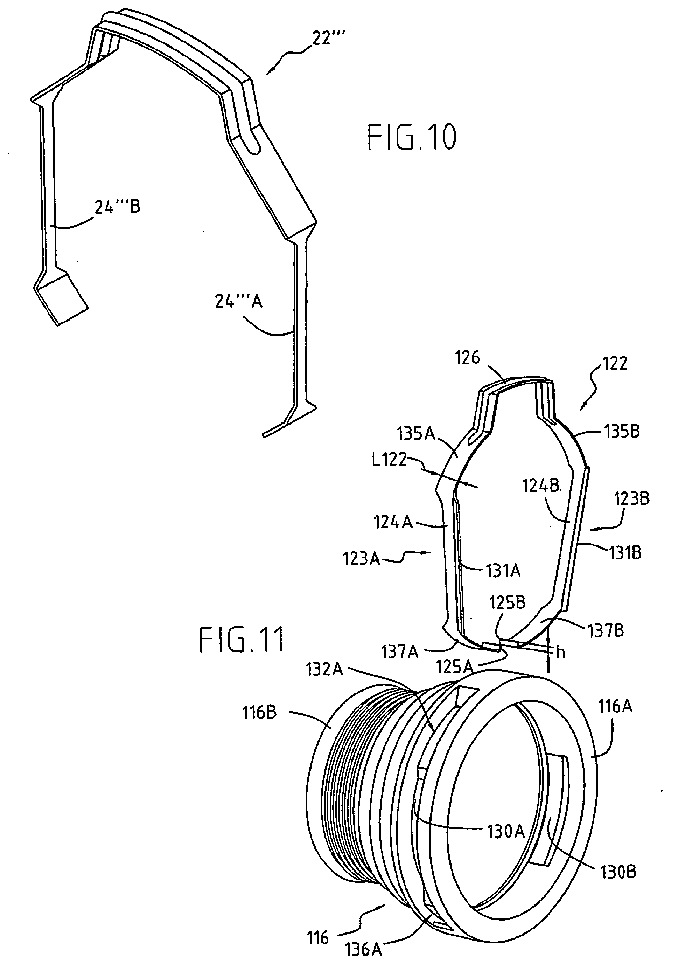

La figure 10 montre une autre variante pour une agrafe 22"', réalisée à partir d'une bande découpée localement sur ses bords pour ménager les zones de verrouillage 24"'A et 24"'B, de largeur inférieure à la largeur courante de la bande. La même forme d'agrafe pourrait être obtenue par moulage.

Dans le mode de réalisation représenté sur les figures 1 à 7, la configuration de déverrouillage par traction est stable. En effet, la paroi du corps de l'embout présente des renfoncements de retenue, respectivement 40A et 40B, dans lesquels les extrémités libres repliées 25A et 25B de l'agrafe sont retenues dans la configuration de déverrouillage par traction comme le montre la figure 7. Dans l'exemple représenté, ces renfoncements de retenue sont formés, chacun, par un décrochement ménagé, dans le fond des renfoncements 36A et 368, sur le bord des rampes 30A et 30B.

Lorsque, à partir de sa configuration de verrouillage représentée sur la figure 5, l'agrafe est manipulée par traction sur le pontet pour passer dans sa configuration de déverrouillage par traction, les extrémités libres de cette agrafe glissent d'abord sur des premières portions des rampes 38A et 38B, dans lesquelles ces décrochements ne sont pas ménagés, jusqu'à venir se loger dans les décrochements 40A et 40B pour être naturellement retenues dans ces derniers. Les bords inférieurs 40'A et 40'B de ces décrochements, qui les raccordent aux parties courantes des rampes 38A et 38B, sont suffisamment peu inclinés (angle β) par rapport à un rayon R passant par le centre géométrique C de l'embout pour permettre que les extrémités libres 25A et 25B de l'agrafe sortent facilement de ces décrochements 40A et 40B lorsqu'une pression est exercée sur le pontet 26.

Les bords supérieurs 40"A et 40"B de ces décrochements, qui les raccordent aux bords des fentes 30A et 30B, forment des surfaces de blocage qui retiennent les zones de déverrouillage 37A et 37B dans les décrochements de manière à empêcher que l'agrafe soit davantage déplacée par traction dans le sens T.

L'agrafe ne peut donc être démontée qu'en écartant ses branches l'une de l'autre, ce qui nécessite l'utilisation d'un outil.

Les renfoncements 36A et 36B forment des renfoncements de logement pour les extrémités libres 25A et 25B de l'agrafe dans sa configuration de verrouillage.

Ces extrémités 25A et 25B, de même que les zones de déverrouillage 37A et 37B du mode de réalisation des figures 1 à 7 sont repliées vers l'intérieur de l'agrafe par rapport aux zones de verrouillage 24A et 24B. En d'autres termes, les zones de déverrouillage 37A et 37B sont dirigées l'une vers l'autre.

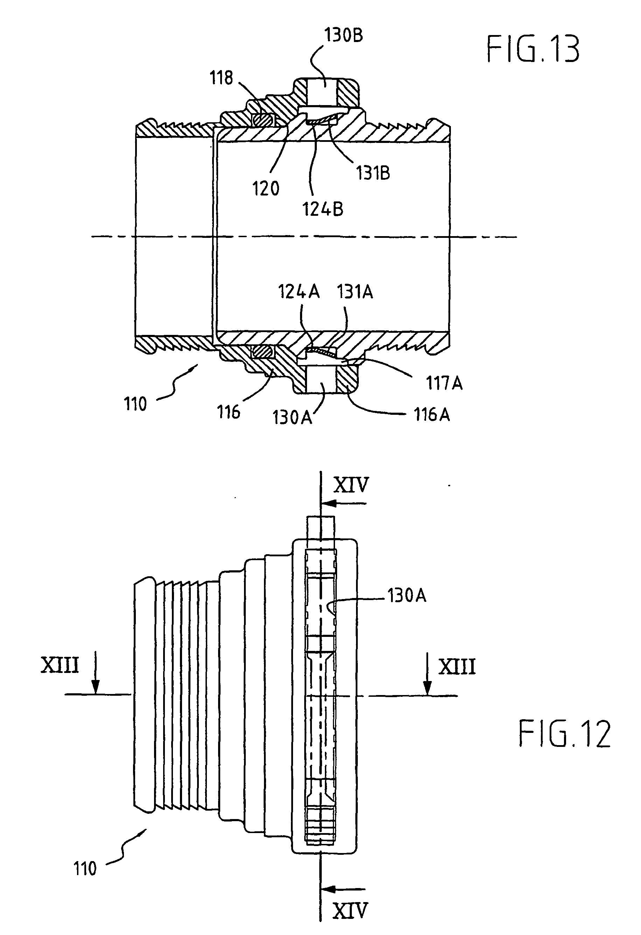

On décrit maintenant la variante de réalisation des figures 11 à 16, sur laquelle les éléments analogues à ceux des figures précédentes sont affectés des mêmes références, augmentées de 100. L'agrafe 122 présente globalement une forme en U, avec un pontet 126, deux zones de verrouillage 124A et 124B formées sur ses branches 123A et 123B, et des extrémités libres 125A et 125B repliées vers l'intérieur. Comme on le voit sur la figure 11, ces extrémités libres sont même repliées vers le pontet 126.

Les zones de déverrouillage par pression 135A et 135B de l'agrafe 122 sont formées par des portions arquées de cette agrafe, disposées entre les zones de verrouillage 124A et 124B et le pontet 126. Les zones de déverrouillage 137A et 137B de l'agrafe sont quant à elles disposées entre les extrémités des zones de verrouillage 124A et 124B opposées au pontet et les extrémités libres 125A et 125B. Elles sont également formées par des portions arquées de l'agrafe.

Dans cette variante de réalisation, la largeur L122 de l'agrafe, mesurée selon la direction axiale de la connexion, est sensiblement constante sur l'intégralité de cette agrafe. On remarque que le bord transversal de l'agrafe qui, lorsque cette dernière est en place dans le corps 116 de l'embout, est dirigé vers l'extrémité libre 116A de ce corps, présente de légères déformations 131A et 131B qui forment des rampes facilitant l'introduction du tube dans l'embout lors de l'emmanchement de ce dernier sur le tube.

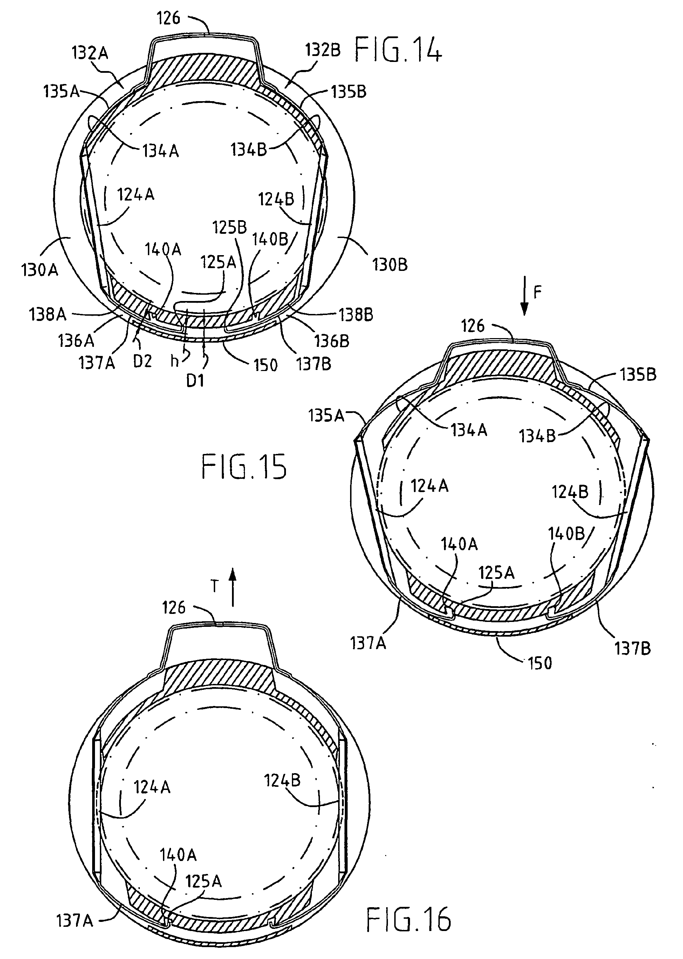

Le corps de l'embout présente deux fentes 130A et 130B diamétralement opposées, qui débouchent dans la première partie 117A de la cavité et sont orientées transversalement par rapport à la direction axiale de l'embout. Comme on le voit notamment sur les figures 11 et 14, la paroi externe du corps de l'embout présente deux renfoncements, respectivement 132A et 132B ménagés au voisinage de l'extrémité supérieure des fentes 130A et 130B.

Elle présente également deux renfoncements 136A et 136B ménagés au voisinage des extrémités inférieures de ces fentes.

Contrairement au mode de réalisation des figures 1 à 7, les fonds de ces renfoncements sont pleins sur leur intégralité. En d'autres termes, les rampes de déverrouillage par pression 134A et 134B et les rampes de déverrouillage par traction 138A et 138B ne sont pas formées par les bords des fentes, mais par les fonds pleins des renfoncements 132A et 136A entre lesquels s'étend la fente 130A et des renfoncements 132B et 136B entre lesquels s'étend la fente 130B.

Les fonds de ces renfoncements forment des arcs de cercle (en intersection avec un plan transversal), de courbure adaptée aux formes arquées des zones de déverrouillage 135A, 135B, 137A et 137B de l'agrafe 22.

Le pontet 126 est davantage éloigné des zones de verrouillage 124A et 124B que le pontet 26 de l'agrafe des figures 1 à 7 ne l'était des zones de verrouillage 24A et 24B de cette agrafe. En effet, il est nécessaire que les zones de déverrouillage 135A et 135B s'étendent sur une longueur suffisante entre le pontet 126 et les zones de verrouillage 124A et 124B pour pouvoir glisser sur les rampes 132A et 132B lors d'un déverrouillage par pression sans pénétrer dans les fentes 130A et 130B.

Lors d'un déverrouillage par traction, comme le montre la figure 16, les extrémités libres repliées de l'agrafe 125A et 125B pénètrent dans des renfoncements de retenue qui, en l'espèce, sont formés par des encoches 140A et 140B pratiquées sur les rampes 138A et 138B. Il suffit d'exercer une pression sur le pontet 126 pour faire sortir les extrémités libres 125A et 125B de ces encoches et permettre le passage de l'agrafe dans sa configuration de verrouillage représentée sur la figure 14.

Il est à noter que, dans ce deuxième mode de réalisation, les renfoncements 136A et 136B sont des renfoncements de logement dans lesquels les extrémités libres 125A, 125B de l'agrafe 122 sont logées sur l'intégralité de leur course entre les configurations de verrouillage et de déverrouillage de l'agrafe. De plus, le corps 116 de l'embout présente un élément de paroi 150 sous lequel sont disposées les extrémités libres de l'agrafe. Cet élément de paroi protège ces extrémités libres et empêche une séparation intempestive de l'agrafe par rapport au corps de l'embout. En effet, la distance radiale D1 qui sépare l'élément de paroi 150 des rampes 138A et 138B entre les encoches 140A et 140B est suffisamment importante pour permettre un coulissement libre des extrémités libres 125A et 125B dans l'espace ainsi ménagé. En revanche, la distance radiale D2 qui sépare les rampes 138A ou 138B de l'élément de paroi 150 de l'autre côté des encoches 140A ou 140B est inférieure à la distance D1. Elle est très légèrement supérieure à la hauteur h de repli des extrémités 125A et 125B de l'agrafe.

Cette distance D2 est donc suffisante pour permettre l'introduction des extrémités libres de l'agrafe dans l'espace ménagé entre l'élément de paroi 150 et les rampes 138A et 138B lors de la mise en place de l'agrafe sur le corps de l'embout, mais suffisamment petite pour que l'extraction de ces extrémités libres en dehors de cet espace lors d'une traction sur le pontet soit pratiquement impossible, compte tenu, par ailleurs, de la tendance naturelle des extrémités libres à se loger dans les encoches 140A et 140B du fait de l'élasticité intrinsèque de l'agrafe de verrouillage.

En l'espèce, les deux rampes 138A et 138B se rejoignent sur une portion de paroi en arc, entre les encoches 140A et 140B, sous l'élément de paroi 150.

## Revendications

1. Embout de connexion rapide (10) susceptible d'être emmanché axialement sur un tube (12) qui présente une surface d'accrochage (14) sensiblement radiale distante de son extrémité libre (12A), l'embout comprenant un corps (16) apte à coopérer avec des moyens d'étanchéité (18) pour établir une liaison étanche avec le tube (12) et une agrafe de verrouillage (22 ; 22' ; 22" ; 22"'), qui est retenue axialement par rapport au corps (16) et qui présente au moins une zone de verrouillage (24A, 24B ; 24'A, 24'B ; 24"A, 24"B ; 24"'A, 24"'B), l'agrafe étant susceptible, à partir d'une configuration de verrouillage dans laquelle la zone de verrouillage fait saillie à l'intérieur du corps et est apte à coopérer avec la surface d'accrochage (14) du tube (12) pour retenir ce dernier, d'être déformée élastiquement pour adopter une configuration de déverrouillage, l'agrafe (22 ; 22' ; 22" ; 22"') étant disposée sur la paroi du corps (16), cette dernière présentant au moins une fente transversale (30A, 30B) à travers laquelle la zone de verrouillage (24A, 24B ; 24'A, 24'B ; 24"A, 24"B ; 24"'A, 24"'B) fait saillie à l'intérieur du corps dans la configuration de verrouillage de l'agrafe et au moins un renfoncement (32A, 32B ; 36A, 36B) ménagé à une extrémité de la fente, ce renfoncement ayant une partie de fond (34A, 34B; 38A, 38B) formée sur le bord de la fente, l'agrafe (22 ; 22' ; 22" ; 22"') présentant au moins une zone de déverrouillage (35A, 35B ; 37A, 37B), qui est située à une extrémité de la zone de verrouillage et dont la largeur (L35 ; L37) est supérieure à la largeur (L24) de ladite zone de verrouillage (24A, 24B; 24'A, 24'B ; 24"A, 24"B; 24"'A, 24"'B) et à la largeur (L30) de la fente (30A, 30B), mais inférieure ou égale à la largeur (L32) du renfoncement, lesdites largeurs étant mesurées axialement, **caractérisé en ce que**
ladite partie de fond du renfoncement formant une rampe de déverrouillage (34A, 34B ; 38A, 38B) sur laquelle la zone de déverrouillage est apte à glisser pour faire passer l'agrafe de sa configuration de verrouillage à sa configuration de déverrouillage, **caractérisé en ce que** ladite partie de fond du renfoncement (32A, 32B; 36A, 36B) formant la rampe de déverrouillage (34A, 34B, 38A, 38B) est ménagée sur le bord de la fente (30A, 30B), de part et d'autre de cette dernière, et **en ce que** la zone de déverrouillage (35A, 35B ; 37A, 37B) s'étend axialement de part et d'autre de la zone de verrouillage (24A, 24B; 24'A, 24'B; 24"A, 24"B ; 24"'A, 24"'B).

2. Embout selon la revendication 1, **caractérisé en ce que** la largeur (L24) de la zone de verrouillage (24A, 24B; 24'A, 24'B ; 24"A, 24"B ; 24"'A, 24"'B) est tout au plus sensiblement égale à la moitié de la largeur (L35, L37) de la zone de déverrouillage (35A, 35B; 37A, 37B).

3. Embout selon la revendication 1 ou 2, **caractérisé en ce que** l'agrafe (22) est formée à partir d'une bande de métal, la zone de verrouillage (24A, 24B) étant formée par une région de cette bande dans laquelle deux portions de bande (24', 24") situées de part et d'autre d'un pli (P24) orienté selon la longueur de la bande sont rabattues l'une contre l'autre.

4. Embout selon la revendication 1 ou 2 **caractérisé en ce que** l'agrafe (22") est formée à partir d'un fil de métal, dont au moins une portion est écrasée pour délimiter la zone de verrouillage (24"A, 24"B).

5. Embout selon l'une quelconque des revendications 1 à 4, **caractérisé en ce que** l'agrafe (22 ; 22' ; 22" ; 22"') présente au moins une zone de déverrouillage supplémentaire (37A, 37B) située à l'autre extrémité de la zone de verrouillage (24A, 24B ; 24'A, 24'B ; 24"A, 24"B ; 24"'A, 24"'B), **en ce que** au moins une rampe de déverrouillage supplémentaire (38A, 38B) est ménagée à l'autre extrémité (30"A, 30"B) de la fente (30A, 30B), et **en ce que** la zone de déverrouillage (35A, 35B) est apte à glisser sur la rampe de déverrouillage (34A, 34B) pour faire passer l'agrafe (22 ; 22' ; 22" ; 22"') dans une première configuration de déverrouillage, tandis que la zone de déverrouillage supplémentaire (37A, 37B) est apte à glisser sur la rampe de déverrouillage supplémentaire (38A, 38B) pour faire passer l'agrafe (22 ; 22' ; 22" ; 22"') dans une deuxième configuration de déverrouillage.

6. Embout selon l'une quelconque des revendications 1 à 5, **caractérisé en ce que** le corps (16) de l'embout (10) présente deux fentes transversales (30A, 30B) situées en regard l'une de l'autre, au moins un renfoncement (32A, 32B ; 36A, 36B), dont une partie de fond forme une rampe de déverrouillage (34A, 34B, 38A, 38B) étant ménagé à une extrémité de chaque fente, tandis que l'agrafe (22 ; 22' ; 22" ; 22"') présente deux zones de verrouillage (24A, 24B ; 24'A, 24'B ; 24"A, 24"B ; 24"'A, 24"'B) engagées, chacune, dans l'une de ces fentes et au moins une zone de déverrouillage (35A, 35B ; 37A, 37B) pour chaque zone de verrouillage.

7. Embout selon la revendication 6, **caractérisé en ce que** l'agrafe (22 ; 22' ; 22" ; 22"') comporte deux branches (23A, 23B ; 23'A, 23'B) reliées par un pontet (26 ; 26") qui fait radialement saillie par rapport au corps de l'embout dans la configuration de verrouillage de l'agrafe, cette dernière présentant deux zones de verrouillage (24A, 24B ; 24'A, 24'B ; 24"A, 24"B ; 24"'A, 24"'B) respectivement situées sur chacune de ses branches et au moins deux zones de déverrouillage par pression (35A, 35B) situées, chacune, entre une zone de verrouillage (24A, 24B ; 24'A, 24'B ; 24"A, 24"B ; 24"'A, 24"'B) et le pontet (26 ; 26"), tandis que le corps (16) de l'embout (10) présente deux rampes de déverrouillage par pression (34A, 34B) sur lesquelles lesdites zones de déverrouillage par pression sont aptes à glisser pour amener l'agrafe (22 ; 22' ; 22" ; 22"') dans une configuration de déverrouillage par pression lorsqu'une pression est exercée sur le pontet (26 ; 26").

8. Embout selon la revendication 6 ou 7, **caractérisé en ce que** l'agrafe (22 ; 22' ; 22" ; 22"') comporte deux branches (23A, 23B ; 23'A, 23'B) reliées par un pontet (26 ; 26") et présente deux zones de verrouillage (24A, 24B ; 24'A, 24'B ; 24"A, 24"B ; 24"'A, 24"'B) respectivement situées sur chacune desdites branches et au moins deux zones de déverrouillage par traction (37A, 37B) situées, chacune, de l'autre côté d'une zone de verrouillage par rapport au pontet (26 ; 26"), tandis que le corps (16) de l'embout présente deux rampes de déverrouillage par traction (38A, 38B) sur lesquelles lesdites zones de déverrouillage par traction sont aptes à glisser pour amener l'agrafe (22 ; 22' ; 22" ; 22"') dans une configuration de déverrouillage par traction lorsqu'une traction est exercée sur le pontet.

9. Embout selon l'une quelconque des revendications 6 à 8, **caractérisé en ce que** l'agrafe (22 ; 22' ; 22" ; 22"') présente sensiblement une forme en U, ses deux branches (23A, 23B ; 23'A, 23'B) étant terminées par des extrémités libres (25A, 25B) et étant reliées par un pontet (26 ; 26") opposé aux dites extrémités.

10. Embout selon l'une quelconque des revendications 1 à 9, **caractérisé en ce que** l'agrafe (22) est susceptible de présenter une configuration de déverrouillage par traction dans laquelle elle est amenée, à partir de sa configuration de verrouillage, par une traction opérée sensiblement dans un plan transversal et **en ce que** l'embout comporte des moyens (40"A, 40"B ; 37A, 37B) pour limiter le déplacement de l'agrafe par traction.

11. Embout selon l'une quelconque des revendications 1 à 10, **caractérisé en ce que** l'agrafe comporte deux branches (23A, 23B; 23'A, 23'B ; 123A, 123B), reliées par un pontet (26 ; 26"; 126) et pourvues, chacune, d'une zone de verrouillage (24A, 24B; 24'A, 24'B; 24"A, 24"B ; 24"'A, 24"'B ; 124A, 124B), cette agrafe étant susceptible, à partir d'une configuration de verrouillage dans laquelle le pontet (26 ; 26" ; 126) fait radialement saillie à l'extérieur du corps (16 ; 116) de l'embout et dans laquelle lesdites zones de verrouillage (24A, 24B; 24'A, 24'B ; 24"A, 24"B; 24"'A, 24"'B ; 124A, 124B) font saillie à l'intérieur du corps (16; 116) et sont aptes à coopérer avec la surface d'accrochage (14) du tube pour retenir ce dernier, d'être déformée élastiquement par une pression (G) sur le pontet (26 ; 26" ; 126) pour adopter une configuration de déverrouillage par pression dans laquelle lesdites branches (23A, 23B ; 23'A, 23'B ; 123A, 123B) sont écartées, **en ce que** l'agrafe (22 ; 22' ; 22" ; 22"' ; 122) est disposée sur la paroi du corps (16 ; 116), cette dernière présentant deux fentes transversales (30A, 30B ; 130A, 130B), à travers chacune desquelles l'une des zones de verrouillage (24A, 24B ; 24'A, 24'B ; 24"A, 24"B ; 24"'A, 24"'B ; 124A, 124B) fait saillie à l'intérieur du corps (16 ; 116) dans la configuration de verrouillage de l'agrafe, **en ce que** le corps présente, pour chaque fente, une rampe de déverrouillage par pression.(34A, 34B ; 134A, 134B) située à une extrémité (30'A ; 30'B) de la fente et une rampe de déverrouillage par traction (38A, 38B) située à l'autre extrémité (30"A, 30"B) de la fente, **en ce que** l'agrafe (22 ; 22' ; 22"; 22"'; 122) présente, pour chaque zone de verrouillage (24A, 24B; 24'A, 24'B ; 24"A, 24"B ; 24"'A, 24"'B ; 124A, 1248), une zone de déverrouillage par pression (35A, 35B ; 135A, 135B) située à une extrémité de la zone de verrouillage voisine du pontet (26 ; 26" ; 126) et une zone de déverrouillage par traction (37A, 378 ; 137A, 137B) située à l'autre extrémité de la zone de verrouillage, de telle sorte que, à partir de ladite configuration de verrouillage, l'agrafe est susceptible d'être déformée élastiquement par une pression (G) sur le pontet (26 ; 26" ; 126) pour adopter ladite configuration de déverrouillage par pression (35A, 35B ; 135A, 135B) par glissement des zones de déverrouillage par pression (34A, 34B ; 134A, 134B) sur les rampes de déverrouillage par pression et d'être déformée élastiquement par une traction (T) sur le pontet (26 ; 26" ; 126) pour adopter, en outre, une configuration de déverrouillage par traction (37A, 37B ; 137A, 137B) par glissement des zones de déverrouillage par traction sur les rampes de déverrouillage par traction (38A, 38B ; 138A, 138B).

12. Embout selon la revendication 11, **caractérisé en ce que** au moins l'une desdites configurations de déverrouillage est stable, l'embout comportant des moyens (40A, 40B ; 140A, 140B) pour maintenir l'agrafe (22 ; 22' ; 22" ; 22"' ; 122) dans cette configuration stable.

13. Embout selon la revendication 11 ou 12, **caractérisé en ce que** l'agrafe (22 ; 22' ; 22" ; 22"' ; 122) présente sensiblement une forme en U, ses deux branches (23A, 23B ; 23'A ; 23'B ; 123A, 123B) étant terminées par des extrémités libres (25A, 25B ; 125A, 125B) et étant reliées par ledit pontet (26 ; 26" ; 126) qui est opposé aux dites extrémités.

14. Embout selon les revendications 12 et 13, **caractérisé en ce que** les extrémités libres (25A, 25B ; 125A, 125B) de l'agrafe (22 ; 22' ; 22" ; 22"' ; 122) sont repliées et **en ce que** la paroi du corps (16 ; 116) de l'embout présente des renfoncements de retenue (40A, 40B ; 140A, 140B) dans lesquels lesdites extrémités libres repliées (25A, 25B ; 125A, 125B) sont retenues dans la configuration de déverrouillage par traction.

15. Embout selon l'une quelconque des revendications 11 à 14, **caractérisé en ce que** le corps (116) de l'embout présente des renfoncements de logement (136A, 136B) dans lesquels sont logées les extrémités libres (125A, 125B) de l'agrafe (122) sur l'intégralité de leur course entre les configurations de verrouillage et de déverrouillage de l'agrafe.

16. Embout selon la revendication 15, **caractérisé en ce que** le corps (116) de l'embout présente un élément de paroi (150) sous lequel sont disposées les extrémités libres (125A, 125B) de l'agrafe (122).

## Claims

1. A quick-connect coupling (10) suitable for being fitted axially onto a tube (12) which presents a substantially radial catch surface (14) remote from its free end (12A), the coupling comprising a body (16) suitable for co-operating with sealing means (18) for establishing a leaktight connection with the tube (12), and a locking clip (22; 22'; 22"; 22''') which is retained axially relative to the body (16) and which presents at least one locking zone (24A, 24B; 24'A, 24'B; 24"A, 24"B; 24'''A, 24'''B), the clip being such that, starting from a locking configuration in which the locking zone projects into the body and is able to cooperate with the catch surface (14) of the tube (12) in order to retain said tube, said clip is suitable for being elastically deformed to take up an unlocking configuration, the clip (22; 22'; 22"; 22"') being disposed over the wall of the body (16), which wall is provided with at least one transverse slot (30A, 30B) through which the locking zone (24A, 24B; 24'A, 24'B; 24"A, 24"B; 24'''A, 24'''B) projects into the body when the clip is in the locking configuration, and with at least one setback (32A, 32B; 36A, 36B) provided at one end of the slot, said setback having a bottom portion (34A, 34B; 38A, 38B) formed on the edge of the slot, the clip (22; 22'; 22"; 22"') having at least one unlocking zone (35A, 35B; 37A, 37B) which is situated at one end of the locking zone and whose width (L35; L37) is greater than the width (L24) of said locking zone (24A, 24B; 24'A, 24'B; 24"A, 24"B; 24'''A, 24'''B) and than the width (L30) of the slot (30A, 30B), but less than or equal to the width (L32) of the setback, said widths being measured axially, said bottom portion of the setback forming an unlocking ramp (34A, 34B; 38A, 38B) on which the unlocking zone is suitable for sliding in order to cause the clip to go from its locking configuration to its unlocking configuration,**characterized in that** said bottom portion of the setback (32A, 32B; 36A, 36B) forming the unlocking ramp (34A, 34B, 38A, 38B) is provided on the edge of the slot (30A, 30B), on both sides thereof, and **in that** the unlocking zone (35A, 35B; 37A, 37B) extends axially on both sides of the locking zone (24A, 24B; 24'A, 24'B; 24"A, 24"B; 24'''A, 24'''B).

2. A coupling according to claim 1, **characterized in that** the width (L24) of the locking zone (24A, 24B; 24'A, 24'B; 24"A, 24"B; 24'''A, 24'''B) is at the most substantially equal to one half of the width (L35, L37) of the unlocking zone (35A, 35B; 37A, 37B).

3. A coupling according to claim 1 or 2, **characterized in that** the clip (22) is formed from a strip of metal, the locking zone (24A, 24B) being formed by a region of said strip in which two strip portions (24', 24") situated on both sides of a fold (P24) extending along the length of the strip are folded over one against the other.

4. A coupling according to claim 1 or 2, **characterized in that** the clip (22") is formed from a metal wire, at least a portion of which is flattened to define the locking zone (24"A, 24"B).

5. A coupling according to any one of claims 1 to 4, **characterized in that** the clip (22; 22'; 22"; 22"') presents at least one additional unlocking zone (37A, 37B) situated at the other end of the locking zone (24A, 24B; 24'A, 24'B; 24"A, 24"B; 24'''A, 24'''B), **in that** at least one additional unlocking ramp (38A, 38B) is provided at the other end (30"A, 30"B) of the slot (30A, 30B), and **in that** the unlocking zone (35A, 35B) is suitable for sliding on the unlocking ramp (34A, 34B) so as to cause the clip (22; 22';22"; 22"') to go into a first unlocking configuration, while the additional unlocking zone (37A, 37B) is suitable for sliding on the additional unlocking ramp (38A, 38B) so as to cause the clip (22; 22'; 22"; 22''') to go into a second unlocking configuration.

6. A coupling according to any one of claims 1 to 5, **characterized in that** the body (16) of the coupling (10) presents two transverse slots (30A, 30B) situated facing each other, at least one setback (32A, 32B; 36A, 36B) whose bottom portion forms an unlocking ramp (34A, 34B, 38A, 38B) being provided at one end of each slot, while the clip (22; 22'; 22"; 22''') presents two locking zones (24A, 24B; 24'A, 24'B; 24"A, 24"B; 24'''A, 24'''B), each of which is engaged in one of said slots, and at least one unlocking zone (35A, 35B; 37A, 37B) for each locking zone.

7. A coupling according to claim 6, **characterized in that** the clip (22; 22'; 22"; 22''') comprises two branches (23A, 23B; 23'A, 23'B) interconnected by a bridge (26; 26") which projects radially relative to the body of the coupling when the clip is in the locking configuration, said clip presenting two locking zones (24A, 24B; 24'A, 24'B; 24"A, 24"B; 24'''A, 24'''B) situated on respective ones of its branches and at least two push unlocking zones (35A, 35B), each of which is situated between a locking zone (24A, 24B; 24'A, 24'B; 24"A, 24"B; 24'''A, 24'''B) and the bridge (26; 26"), while the body (16) of the coupling (10) presents two push unlocking ramps (34A, 34B) on which said push unlocking zones are suitable for sliding in order to bring the clip (22; 22'; 22"; 22''') into a push unlocking configuration when pressure is exerted on the bridge (26; 26").

8. A coupling according to claim 6 or claim 7, **characterized in that** the clip (22; 22'; 22"; 22"') comprises two branches (23A, 23B; 23'A, 23'B) interconnected by a bridge (26; 26"), and presents two locking zones (24A, 24B; 24'A, 24'B; 24"A, 24"B; 24'''A, 24'''B) situated on respective ones of said branches, and at least two pull unlocking zones (37A, 37B), each of which is situated on the other side of a locking zone from the side on which the bridge (26; 26") is situated, while the body (16) of the coupling presents two pull unlocking ramps (38A, 38B) on which said pull unlocking zones are suitable for sliding in order to bring the clip (22; 22'; 22"; 22"') into a pull unlocking configuration when traction is exerted on the bridge.

9. A coupling according to any one of claims 6 to 8, **characterized in that** the clip (22; 22'; 22"; 22"') is substantially U-shaped, its two branches (23A, 23B; 23'A, 23'B) being terminated by free ends (25A, 25B) and being interconnected by a bridge (26; 26") opposite from said ends.

10. A coupling according to any one of claims 1 to 9, **characterized in that** the clip (22) is suitable for presenting a pull unlocking configuration into which it is brought, from its locking configuration, by traction being exerted substantially in a transverse plane, and **in that** the coupling has means (40"A, 40"B; 37A, 37B) for limiting the extent to which the clip can be moved by pulling.

11. A quick-connect coupling (10, 110) according to any one of claims 1 to 10, **characterized in that** the clip comprises two branches (23A, 23B; 23'A, 23'B; 123A, 123B) interconnected by a bridge (26; 26"; 126), each of which branches is provided with a locking zone (24A, 24B; 24'A, 24'B; 24"A, 24"B; 24'''A, 24'''B; 124A, 124B), said clip being such that, starting from a locking configuration in which the bridge (26; 26"; 126) projects radially towards the outside of the body (16,; 116) of the coupling and in which said locking zones (24A, 24B; 24'A, 24'B; 24"A,
24"B; 24'''A, 24'''B; 124A, 124B) project into the body (16; 116) and are suitable for co-operating with the catch surface (14) of the tube in order to retain said tube, said clip is suitable for being deformed elastically by means of pressure (G) being exerted on the bridge (26; 26"; 126) to take up a push unlocking configuration in which said branches (23A, 23B; 23'A, 23'B, 123A, 123B) are driven apart, **in that** the clip (22; 22'; 22"; 22'''; 122) is disposed over the wall of the body (16; 166), which wall is provided with two transverse slots (30A, 30B; 130A, 130B), through each of which one of the locking zones (24A, 24B; 24'A, 24'B; 24"A, 24"B; 24'''A, 24'''B; 124A, 124B) projects into the body (16; 116) when the clip is in the locking configuration, **in that**, for each slot, the body presents a push unlocking ramp (34A, 24B; 134A, 134B) situated at one end (30'A; 30'B) of the slot and a pull unlocking ramp (38A, 38B) situated at the other end (30"A, 30"B) of the slot, **in that**, for each locking zone (24A, 24B; 24'A, 24'B; 24"A, 24"B; 24'''A, 24'''B; 124A, 124B), the clip (22; 22'; 22"; 22"'; 122) presents a push unlocking zone (35A, 25B; 135A, 135B) situated at one end of the locking zone close to the bridge (26; 26"; 126) and a pull unlocking zone (37A, 37B; 137A, 137B) situated at the other end of the locking zone, so that, starting from said locking configuration, the clip is suitable for being elastically deformed by pressure (G) being exerted on the bridge (36; 26"; 126) so as to take up said push unlocking configuration (35A, 35B; 135A, 135B) by sliding the push unlocking zones (34A, 34B; 134A, 134B) on the push unlocking ramps, and for being elastically deformed by traction (T) being exerted on the bridge (26; 26"; 126) so as to take up, in addition, a pull unlocking configuration (37A, 37B; 137A, 137B) by sliding the pull unlocking zones on the pull unlocking ramps (38A, 38B; 138A, 138B).

12. A coupling according to claim 11, **characterized in that** at least one of the unlocking configurations is stable, the coupling having means (40A, 40B; 140A, 140B) for holding the clip (22; 22'; 22"; 22''', 122) in this stable configuration.

13. A coupling according to claim 11 or claim 12, **characterized in that** the clip (22; 22'; 22"; 22'''; 122) is substantially U-shaped, its two branches (23A, 23B; 23'A; 23'B; 123A, 123B) being terminated by free ends (25A, 25B; 125A, 125B) and being interconnected by said bridge (26; 26"; 126) which is opposite from said ends.

14. A coupling according to claim 12 and claim 13, **characterized in that** the free ends (25A, 25B; 125A, 125B) of the clip (22; 22'; 22"; 22"'; 122) are folded back, and **in that** the wall of the body (16; 116) of the coupling is provided with retaining setbacks (40A, 40B; 140A, 140B) in which said folded-back free ends (25A, 25B; 125A, 125B) are retained in the pull unlocking configuration.

15. A coupling according to any one of claims 11 to 14, **characterized in that** the body (116) of the coupling is provided with accommodation setbacks (136A, 136B) in which the free ends (125A, 125B) of the clip (122) are received over their entire strokes between the locking configuration and the unlocking configuration of the clip.

16. A coupling according to claim 15, **characterized in that** the body (116) of the coupling has a wall element (150) under which the free ends (125A, 125B) of the clip (122) are disposed.

## Patentansprüche

1. Schnellverbindungsstutzen (10), der geeignet ist, auf ein Rohr (12), das eine im wesentlichen radiale, von seinem freien Ende (12A) entfernte Anschlußfläche (14) aufweist, axial aufgesteckt zu werden, wobei der Stutzen einen Körper (16), der geeignet ist, mit Dichtungsmitteln (18) zusammenzuwirken, um eine dichte Verbindung mit dem Rohr (12) herzustellen, sowie eine Verriegelungsklammer (22; 22'; 22"; 22"') umfaßt, die gegenüber dem Körper (16) axial gehalten ist und die wenigstens einen Verriegelungsbereich (24A, 24B; 24'A, 24'B; 24"A, 24"B; 24"'A, 24"'B) aufweist, wobei die Klammer - ausgehend von einer Verriegelungsausbildung, in welcher der Verriegelungsbereich innerhalb des Körpers vorspringt und in der Lage ist, mit der Anschlußfläche (14) des Rohrs (12) zusammenzuwirken, um letzteres zu halten - geeignet ist, elastisch verformt zu werden, um eine Entriegelungsausbildung anzunehmen, wobei die Klammer (22; 22'; 22"; 22"') an der Wand des Körpers (16) angeordnet ist, wobei letztere wenigstens einen Querschlitz (30A, 30B), durch den der Verriegelungsbereich (24A, 24B; 24'A, 24'B; 24"A, 24"B; 24"'A, 24"'B) in der Verriegelungsausbildung der Klammer innerhalb des Körpers vorspringt, sowie wenigstens eine Vertiefung (32A, 32B; 36A, 36B) aufweist, die an einem Ende des Schlitzes ausgebildet ist, wobei diese Vertiefung einen Bodenteil (34A, 34B; 38A, 38B) aufweist, der am Rand des Schlitzes ausgebildet ist, wobei die Klammer (22; 22'; 22"; 22"') wenigstens einen Entriegelungsbereich (35A, 35B; 37A, 37B) aufweist, der an einem Ende des Verriegelungsbereichs gelegen ist und dessen Breite (L35; L37) größer als die Breite (L24) des Verriegelungsbereichs (24A, 24B; 24'A, 24'B; 24"A, 24"B; 24"'A, 24"'B) und als die Breite (L30) des Schlitzes (30A, 30B), aber kleiner als die oder gleich der Breite (L32) der Vertiefung ist, wobei die Breiten axial gemessen sind, wobei der Bodenteil der Vertiefung eine Entriegelungsrampe (34A, 34B; 38A, 38B) bildet, an der der Entriegelungsbereich zu gleiten geeignet ist, um die Klammer von ihrer Verriegelungsausbildung in ihre Entriegelungsausbildung zu überführen,
**dadurch gekennzeichnet, daß** der Bodenteil der Vertiefung (32A, 32B; 36A, 36B), der die Entriegelungsrampe (34A, 34B, 38A, 38B) bildet, am Rand des Schlitzes (30A, 30B) auf beiden Seiten dessen ausgebildet ist und daß der Entriegelungsbereich (35A, 35B; 37A, 37B) sich auf beiden Seiten des Verriegelungsbereichs (24A, 24B; 24'A, 24'B; 24"A, 24"B; 24"'A, 24"'B) axial erstreckt.

2. Stutzen nach Anspruch 1, **dadurch gekennzeichnet, daß** die Breite (L24) des Verriegelungsbereichs (24A, 24B; 24'A, 24'B; 24"A, 24"B; 24"'A, 24"'B) höchstens im wesentlichen gleich der Hälfte der Breite (L35, L37) des Entriegelungsbereichs (35A, 35B; 37A, 37B) ist.

3. Stutzen nach Anspruch 1 oder 2, **dadurch gekennzeichnet, daß** die Klammer (22) aus einem Metallband ausgebildet ist, wobei der Verriegelungsbereich (24A, 24B) durch einen Bereich dieses Bandes gebildet ist, in dem zwei auf beiden Seiten eines in der Länge des Bandes ausgerichteten Knicks (P24) gelegene Bandabschnitte (24', 24") gegeneinander umgeklappt sind.

4. Stutzen nach Anspruch 1 oder 2, **dadurch gekennzeichnet, daß** die Klammer (22") aus einem Metalldraht ausgebildet ist, von dem wenigstens ein Abschnitt zusammengedrückt ist, um den Verriegelungsbereich (24"A, 24"B) zu begrenzen.

5. Stutzen nach einem der Ansprüche 1 bis 4, **dadurch gekennzeichnet, daß** die Klammer (22; 22'; 22"; 22"') wenigstens einen am anderen Ende des Verriegelungsbereichs (24A, 24B; 24'A, 24'B; 24"A, 24"B; 24"'A, 24"'B) gelegenen zusätzlichen Entriegelungsbereich (37A, 37B) aufweist, daß wenigstens eine zusätzliche Entriegelungsrampe (38A, 38B) am anderen Ende (30"A, 30"B) des Schlitzes (30A, 30B) ausgebildet ist und daß der Entriegelungsbereich (35A, 35B) geeignet ist, auf der Entriegelungsrampe (34A, 34B) zu gleiten, um die Klammer (22; 22'; 22"; 22"') in eine erste Entriegelungsausbildung zu überführen, während der zusätzliche Entriegelungsbereich (37A, 37B) geeignet ist, auf der zusätzlichen Entriegelungsrampe (38A, 38B) zu gleiten, um die Klammer (22; 22'; 22"; 22"') in eine zweite Entriegelungsausbildung zu überführen.

6. Stutzen nach einem der Ansprüche 1 bis 5, **dadurch gekennzeichnet, daß** der Körper (16) des Stutzens (10) zwei einander gegenüberliegende Querschlitze (30A, 30B) aufweist, wobei wenigstens eine Vertiefung (32A, 32B; 36A, 36B), von der ein Bodenteil eine Entriegelungsrampe (34A, 34B, 38A, 38B) bildet, an einem Ende jedes Schlitzes ausgebildet ist, während die Klammer (22; 22'; 22"; 22"') zwei Verriegelungsbereiche (24A, 24B; 24'A, 24'B; 24"A, 24"B; 24"'A, 24"'B), die jeweils in einen dieser Schlitze eingesteckt sind, sowie wenigstens einen Entriegelungsbereich (35A, 35B; 37A, 37B) für jeden Verriegelungsbereich aufweist.

7. Stutzen nach Anspruch 6, **dadurch gekennzeichnet, daß** die Klammer (22; 22'; 22"; 22"') zwei Schenkel (23A, 23B; 23'A, 23'B) aufweist, die durch einen Steg (26; 26") verbunden sind, der gegenüber dem Körper des Stutzens in der Verriegelungsausbildung der Klammer radial vorspringt, wobei letztere zwei Verriegelungsbereiche (24A, 24B; 24'A, 24'B; 24"A, 24"B; 24"'A, 24"'B), die jeweils an jedem ihrer Schenkel gelegen sind, sowie wenigstens zwei Druckentriegelungsbereiche (35A, 35B), die jeweils zwischen einem Verriegelungsbereich (24A, 24B; 24'A, 24'B; 24"A, 24"B; 24"'A, 24"'B) und dem Steg (26; 26") gelegen sind, aufweist, während der Körper (16) des Stutzens (10) zwei Druckentriegelungsrampen (34A, 34B) aufweist, auf denen die Druckentriegelungsbereiche zu gleiten geeignet sind, um die Klammer (22; 22'; 22"; 22"') in eine Druckentriegelungsausbildung zu bringen, wenn ein Druck auf den Steg (26; 26") ausgeübt wird.

8. Stutzen nach Anspruch 6 oder 7, **dadurch gekennzeichnet, daß** die Klammer (22; 22'; 22"; 22"') zwei Schenkel (23A, 23B; 23'A, 23'B) umfaßt, die durch einen Steg (26; 26") verbunden sind, sowie zwei Verriegelungsbereiche (24A, 24B; 24'A, 24'B; 24"A, 24"B; 24"'A, 24"'B), die jeweils an jedem der Schenkel gelegen sind, und wenigstens zwei Zugentriegelungsbereiche (37A, 37B), die - bezogen auf den Steg (26; 26") - jeweils auf der anderen Seite eines Verriegelungsbereichs gelegen sind, aufweist, während der Körper (16) des Stutzens zwei Zugentriegelungsrampen (38A, 38B) aufweist, auf denen die Zugentriegelungsbereiche zu gleiten geeignet sind, um die Klammer (22; 22'; 22"; 22"') in eine Zugentriegelungsausbildung zu bringen, wenn ein Zug auf den Steg ausgeübt wird.

9. Stutzen nach einem der Ansprüche 6 bis 8, **dadurch gekennzeichnet, daß** die Klammer (22; 22'; 22"; 22"') im wesentlichen eine U-Form aufweist, wobei ihre beiden Schenkel (23A, 23B; 23'A, 23'B) durch freie Enden (25A, 25B) auslaufen und durch einen den Enden gegenüberliegenden Steg (26; 26") verbunden sind.

10. Stutzen nach einem der Ansprüche 1 bis 9, **dadurch gekennzeichnet, daß** die Klammer (22) geeignet ist, eine Zugentriegelungsausbildung aufzuweisen, in die sie von ihrer Verriegelungsausbildung ausgehend durch einen im wesentlichen in einer Querebene ausgeübten Zug gebracht wird, und daß der Stutzen Mittel (40"A, 40"B; 37A, 37B) umfaßt, um die Bewegung der Klammer durch Zug zu begrenzen.

11. Stutzen nach einem der Ansprüche 1 bis 10, **dadurch gekennzeichnet, daß** die Klammer zwei Schenkel (23A, 23B; 23'A, 23'B; 123A, 123B) aufweist, die durch einen Steg (26; 26"; 126) verbunden und jeweils mit einem Verriegelungsbereich (24A, 24B; 24'A, 24'B; 24"A, 24"B; 24"'A, 24"'B; 124A, 124B) versehen sind, wobei diese Klammer - von einer Verriegelungsausbildung ausgehend, in welcher der Steg (26; 26"; 126) außerhalb des Körpers (16; 116) des Stutzens radial vorspringt und in der die Verriegelungsbereiche (24A, 24B; 24'A, 24'B; 24"A, 24"B; 24"'A, 24"'B; 124A, 124B) innerhalb des Körpers (16; 116) vorspringen und in der Lage sind, mit der Anschlußfläche (14) des Rohrs zusammenzuwirken, um letzteres zu halten - geeignet ist, durch einen Druck (G) auf den Steg (26; 26"; 126) elastisch verformt zu werden, um eine Druckentriegelungsausbildung anzunehmen, in welcher die Schenkel (23A, 23B; 23'A, 23'B; 123A, 123B) gespreizt sind, daß die Klammer (22; 22'; 22"; 22"'; 122) an der Wand des Körpers (16; 116) angeordnet ist, wobei letztere zwei Querschlitze (30A, 30B; 130A, 130B) aufweist, durch einen jeden von ihnen einer der Verriegelungsbereiche (24A, 24B; 24'A, 24'B; 24"A, 24"B; 24"'A, 24"'B; 124A, 124B) in der Verriegelungsausbildung der Klammer innerhalb des Körpers (16; 116) vorspringt, daß der Körper für jeden Schlitz eine Druckentriegelungsrampe (34A, 34B; 134A, 134B), die an einem Ende (30'A, 30'B) des Schlitzes liegt, sowie eine Zugentriegelungsrampe (38A, 38B), die am anderen Ende (30"A, 30"B) des Schlitzes liegt, aufweist, daß die Klammer (22; 22'; 22"; 22"'; 122) für jeden Verriegelungsbereich (24A, 24B; 24'A, 24'B; 24"A, 24"B; 24"'A, 24"'B; 124A, 124B) einen Druckentriegelungsbereich (35A, 35B; 135A, 135B), der an einem Ende des benachbarten Verriegelungsbereichs des Stegs (26; 26"; 126) liegt, sowie einen Zugentriegelungsbereich (37A, 37B; 137A, 137B), der am anderen Ende des Verriegelungsbereichs liegt, aufweist, so daß - ausgehend von der Verriegelungsausbildung - die Klammer geeignet ist, durch einen Druck (G) auf den Steg (26; 26"; 126) elastisch verformt zu werden, um die Druckentriegelungsausbildung (35A, 35B; 135A, 135B) durch Gleiten der Druckentriegelungsbereiche (34A, 34B; 134A, 134B) auf den Druckentriegelungsrampen anzunehmen, und durch einen Zug (T) auf den Steg (26; 26"; 126) elastisch verformt zu werden, um außerdem eine Zugentriegelungsausbildung (37A, 37B; 137A, 137B) durch Gleiten der Zugentriegelungsbereiche auf den Zugentriegelungsrampen (38A, 38B; 138A, 138B) anzunehmen.

12. Stutzen nach Anspruch 11, **dadurch gekennzeichnet, daß** wenigstens eine der Entriegelungsausbildungen stabil ist, wobei der Stutzen Mittel (40A, 40B; 140A, 140B) umfaßt, um die Klammer (22; 22'; 22"; 22"'; 122) in dieser stabilen Ausbildung zu halten.

13. Stutzen nach Anspruch 11 oder 12, **dadurch gekennzeichnet, daß** die Klammer (22; 22'; 22"; 22"'; 122) im wesentlichen eine U-Form aufweist, wobei ihre beiden Schenkel (23A, 23B; 23'A, 23'B; 123A, 123B) durch freie Enden (25A, 25B; 125A, 125B) auslaufen und durch den Steg (26; 26"; 126), der den Enden gegenüberliegt, verbunden sind.

14. Stutzen nach den Ansprüchen 12 und 13, **dadurch gekennzeichnet, daß** die freien Enden (25A, 25B; 125A, 125B) der Klammer (22; 22'; 22"; 22"'; 122) umgebogen sind und daß die Wand des Körpers (16; 116) des Stutzens Haltevertiefungen (40A, 40B; 140A, 140B) aufweist, in denen die umgebogenen freien Enden (25A, 25B; 125A, 125B) in der Zugentriegelungsausbildung gehalten sind.

15. Stutzen nach einem der Ansprüche 11 bis 14, **dadurch gekennzeichnet, daß** der Körper (116) des Stutzens Aufnahmevertiefungen (136A, 136B) aufweist, in denen die freien Enden (125A, 125B) der Klammer (122) über ihren vollständigen Weg zwischen der Verriegelungsausbildung und der Entriegelungsausbildung der Klammer aufgenommen sind.

16. Stutzen nach Anspruch 15, **dadurch gekennzeichnet, daß** der Körper (116) des Stutzens ein Wandelement (150) aufweist, unter dem die freien Enden (125A, 1258) der Klammer (122) angeordnet sind.
